# EUROPÄISCHE PATENTSCHRIFT

(11) **EP 3 086 001 B1**
(45) Veröffentlichungstag und Bekanntmachung des Hinweises auf die Patenterteilung: **01.09.2021**
(21) Anmeldenummer: 16166227.5
(22) Anmeldetag: 20.04.2016
(51) Int. Cl.: F16J 13/12

(54) **VERSCHLUSSSCHRAUBE**
PLUG SCREW
VIS DE FERMETURE

(30) Priorität: 22.04.2015 DE 102015106192
(43) Veröffentlichungstag der Anmeldung: 26.10.2016
(73) Patentinhaber: Johannes Schäfer vormals Stettiner Schraubenwerke GmbH & Co. KG, 35410 Hungen (DE)
(72) Erfinder: Forro, Norbert, 35447 Reiskirchen (DE)
(74) Vertreter: Meyer, Niels Thorben

(56) Entgegenhaltungen:
- EP-A1- 0 094 459
- CN-U- 201 581 955
- DE-A1-102012 100 120
- US-A- 2 869 752
- US-A- 3 578 285
- US-A- 4 986 502

## Beschreibung

Verschlussschrauben der angegebenen Art werden zum Verschließen von mit einem Innengewinde versehenen Anschlussöffnungen von pneumatischen Druckbehältern verwendet. Die Verschlussschraube wird hierbei in einer Gewindebohrung des Druckbehälters mit einem definierten Anzugsmoment festgeschraubt, wobei zwischen ihrem Kopf und der Behälterwand ein Dichtring eingeklemmt wird, der die Verschlussschraube gegenüber der Behälterwand abdichtet. Durch die axiale Verspannung der Verschlussschraube mit dem Dichtring und dem Innengewinde der Behälteröffnung wird ein Reibmoment erzeugt, das die Verschlussschraube gegen selbsttätiges Lösen sichert. Durch thermische Einflüsse und Schwingungsbeanspruchung kann das die Verschlussschraube sicherende Reibmoment jedoch geschwächt werden. Es besteht daher ein Bedürfnis, die Verschlussschraube mit einer zusätzlichen Sicherung gegen Lösen zu versehen.

EP 0 094 459 A1 offenbart eine Entlüftungsschraube für ein hydraulisches System mit einem ein Außengewinde aufweisenden Körper, einer stöpselartigen Spitze, einer Dichtfläche und einem Belüftungskanal, der sich hinter der Dichtfläche öffnet und sich durch den Körper erstreckt, wobei eine ringförmige Nut den Gewindeabschnitt unterbricht und mit einem Abdichtungsring ausgerüstet ist.

Die Erfindung betrifft eine Verschlussschraube für einen Druckbehälter nach Anspruch 1.

Aus US 2,869,752 A ist eine Entlüftungsschraube bekannt, die einen Kanal aufweist, durch den unter Druck stehendes Fluid bei einem Druckausgleich entweichen kann.

DE 10 2012 100 120 A1 beschreibt eine Verschlusseinrichtung zum Verschließen einer hydraulischen und/oder pneumatischen Bohrung, mit einem hülsenartigen Dichtelement, das in die zu verschließende Bohrung eingesetzt wird und das sich durch Verformung dichtend an die Innenwandung der Bohrung anlegt. Die Verschlusseinrichtung umfasst ferner ein Verformungselement, das längsbeweglich im Innenraum des Dichtelements angeordnet ist und das aus wenigstens einer Montageposition in wenigstens eine Verschlussposition bewegbar ist und hierbei die Verformung des Dichtelements herbeiführt. Durch einen Dreh-Stell-Mechanismus wird eine extern aufgebrachte Drehbewegung in eine Längsbewegung des Verformungselements umgesetzt, so dass das Verformungselement aus der Montageposition in die Verschlussposition bewegt wird.

Aus CN 201 581 955 U ist eine Verschlussschraube bekannt, bei der zwei Dichtungsringe zwischen den Außengewinden der Schraube angeordnet sind.

US 4,986,502 offenbart eine Verschlussschraube für einen Druckbehälter mit einer Längsnut im Außengewinde. Durch die Längsnut soll beim Lösen der Verschlussschraube ein noch in dem Druckbehälter bestehender Restdruck feststellbar sein und entweichen können.

Der Erfindung liegt die Aufgabe zugrunde, eine Verschlussschraube der eingangs genannten Art mit einer zusätzlichen Sicherung gegen selbsttätiges Lösen zu versehen, die einfach und kostengünstig herstellbar ist und keine Veränderungen an der Gewindeöffnung des Druckbehälters erfordert.

Die Aufgabe wird durch eine Verschlussschraube mit den in Anspruch 1 angegebenen Merkmalen gelöst. Vorteilhafte Ausgestaltungen der Verschlussschraube sind in den Unteransprüchen angegeben.

Bei der Verschlussschraube nach der Erfindung weist der Schaft in der Außenfläche eine Ringnut auf, die das Außengewinde in einen kopfseitigen ersten Gewindeabschnitt und in einen dem freien Schaftende benachbarten zweiten Gewindeabschnitt unterteilt und in die ein Sicherungsring aus elastomerem Material eingesetzt ist, dessen Außendurchmesser größer ist als der Kerndurchmesser eines zum Außengewinde passenden Innengewindes, wobei eine Radialbohrung den Schaft im Bereich des ersten Gewindeabschnitts durchdringt, die in den Hohlraum mündet.

Die zusätzliche Lösesicherung wird bei der Verschlussschraube nach der Erfindung durch den elastomeren Sicherungsring bewirkt, der mit einem Gewindegang des Innengewindes der die Verschlussschraube aufnehmenden Gewindebohrung in Eingriff tritt und dadurch eine von dem Anzugsmoment unabhängige, radiale Verspannung der Verschlussschraube mit der Gewindebohrung hervorruft, durch die die Verschlussschraube gegen selbsttätiges Lösen gesichert wird. Dabei wird durch die Radialbohrung erreicht, dass der Sicherungsring immer beidseitig von dem Innendruck im mit der Verschlussschraube verschlossenen System beaufschlagt wird, so dass die Klemm- und Spannfunktion des Sicherungsrings durch Druckänderungen auf der Verschlussseite, z.B im Innenraum eines angeschlossenen Druckbehälters, Ventils oder dgl., nicht beeinflusst und beeinträchtigt werden kann. Der Druck auf der Verschlussseite gelangt von der Radialbohrung und vom inneren Ende der Verschlussschraube über die Spalte zwischen den Gewindeabschnitten des Außengewindes und dem Innengewinde auf beide Seiten der Ringnut und des Sicherungsrings.

Außerdem weist der Schaft der Verschlussschraube in der Außenfläche eine Längsnut auf, die sich von der Radialbohrung bis zum freien Schaftende erstreckt und deren Tiefe wenigstens bis zum Kerndurchmesser des Außengewindes der Verschlussschraube reicht. Durch diese in der Außenfläche des Schaftes vorhandene Längsnut, die die Ringnut kreuzt und mit ihren beiden Enden mit dem Behälterinnenraum in Verbindung steht, wird der Strömungsdurchgang zwischen der Verschlussseite und der Ringnut im Bereich der beiden Gewindegänge erweitert und verkürzt. Hierdurch können schnelle Druckänderungen besser und gleichmäßiger auf beiden Seiten des Sicherungsrings übertragen und am Sicherungsring auftretende Druckdifferenzen vermieden werden. Dies ist vor allem bei Verwendung der Verschlussschraube an pneumatischen Ventilen und Steuereinrichtungen von Bedeutung, wo schlagartig hohe Druckänderungen auftreten können.

In einer bevorzugten Ausgestaltung der Erfindung ist der Sicherungsring ein O-Ring. Weiterhin hat sich als vorteilhaft erwiesen, wenn der Außendurchmesser des Sicherungsrings in der Ringnut um 2 bis 15 % größer ist als der Kerndurchmesser des zum Außengewinde passenden Innengewindes und die Breite der Ringnut im Wesentlichen dem Schnurdurchmesser des O-Rings entspricht.

Zur Erzielung der gewünschten Spannung zwischen dem Sicherungsring und der Verschlussschraube ist es weiterhin vorteilhaft, wenn der Innendurchmesser des Sicherungsrings im entspannten Zustand um 2 bis 15 % kleiner ist als der Innendurchmesser der Ringnut.

Als Elastomere zur Herstellung des Sicherungsrings kommen insbesondere Silikon- und/oder Fluorkautschuk, Ethylen-Propylen-Dien-Kautschuk und thermoplastisches Polyurethan in Betracht. Für hohen Verschleißwiderstand und zur Erzielung eines hohen Reibmoments ist es vorteilhaft, wenn die Härte des verwendeten Werkstoffs möglichst hoch ist.

Nach einem weiteren Vorschlag der Erfindung kann die Verschlussschraube aus einem thermoplastischen oder duroplastischen Kunststoff bestehen. Auch faserverstärkte Kunststoffe kommen als Material für die Verschlussschraube in Betracht. Gerade in Verbindung mit einer aus Kunststoff hergestellten Verschlussschraube erweist sich die erfindungsgemäße Sicherung gegen Lösen als besonders vorteilhaft.

Bei Verschlussschrauben aus Kunststoff besteht das Problem, dass bei Verwendung eines Gabelschlüssels zum Festziehen der Verschlussschraube der Gabelschlüssel abrutscht und den üblicherweise sechskantigen Werkzeugeingriffsbereich beschädigt.

Nach der Erfindung wird daher vorgeschlagen, den Werkzeugeingriffsbereich als Doppelsechskant (Zwölfkant) auszuführen. Es ist dann nicht mehr möglich, mit einem Gabelschlüssel an den Schraubenkopf anzusetzen, sondern es muss ein Ring- oder Steckschlüssel verwendet werden, der einen Innendoppeltsechskant hat. Hierdurch wird die Gefahr einer Beschädigung des Werkzeugeingriffsbereichs vermieden.

Zur Aufnahme eines Dichtrings, der die Verschlussschraube gegenüber einer Wand abdichtet, in der sich eine Gewindebohrung zur Aufnahme der Verschlussschraube befindet, kann zwischen dem Kopf und dem ersten Gewindeabschnitt eine hohlkehlartige Dichtfläche ausgebildet sein, die zur Aufnahme eines vorzugsweise als O-Ring ausgebildeten Dichtrings dient.

Weiterhin kann der Hohlraum der Verschlussschraube mit einer Längsrippe versehen sein. Hierdurch wird eine Drehung der Verschlussschraube bei der Entnahme aus der Spritzgießform ermöglicht.

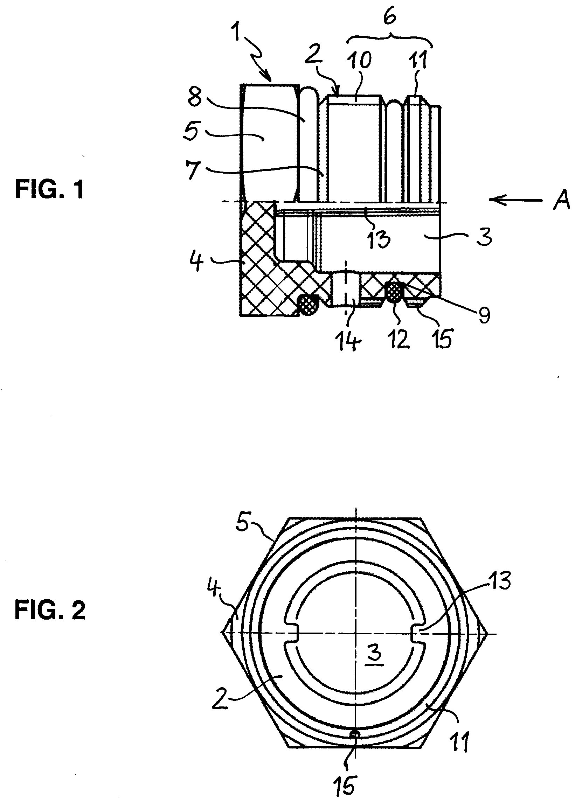

Die Erfindung wird nachfolgend anhand eines Ausführungsbeispiels näher erläutert, das in der Zeichnung dargestellt ist. Es zeigen
- Figur 1: eine Seitenansicht einer Verschlussschraube nach der Erfindung, halbseitig geschnitten,
- Figur 2: eine Stirnansicht aus Richtung A der Verschlussschraube gemäß Figur 1.

Die in der Zeichnung dargestellte Verschlussschraube 1 hat einen sich längs einer Achse erstreckenden zylindrischen Schaft 2 mit einem im Wesentlichen zylindrischen Hohlraum 3, der an einem Ende des Schaftes 2 offen und am entgegengesetzten Ende des Schaftes 2 durch einen an den Schaft 2 angeformten Kopf 4 verschlossen ist. Der Hohlraum weist zwei zur Achse parallele, einander gegenüberliegende Längsrippen 13 auf. Der Kopf 4 hat die Form einer ebenen Scheibe, die eine Umfangskontur in Form eines Sechskantprismas hat, das einen Werkzeugeingriffsbereich 5 bildet. Alternativ kann der Werkzeugeingriffsbereich als Zwölfkantprisma ausgebildet sein. Der Schaft 2 ist auf seiner Außenseite mit einem Außengewinde 6 versehen. Zwischen dem Außengewinde 6 und dem Kopf 4 befindet sich eine hohlkehlartige Dichtfläche 7, in der ein als O-Ring ausgebildeter Dichtring 8 angeordnet ist.

In der Außenfläche des Schaftes 2 befindet sich weiterhin eine Ringnut 9, die das Außengewinde 6 in einen dem Kopf 4 benachbarten ersten Gewindeabschnitt 10 und einen dem freien Schaftende benachbarten zweiten Gewindeabschnitt 11 unterteilt. In der Ringnut 9 ist ein Sicherungsring 12 angeordnet, der aus elastomerem Material besteht und einen Außendurchmesser hat, der wenigstens 2 % größer ist als der Kerndurchmesser eines Innengewindes, in das die Verschlussschraube 1 mit dem Außengewinde 6 einschraubbar ist. Der Sicherungsring 12 ist vorzugsweise als O-Ring ausgebildet.

Im entspannten Zustand, d.h. vor dem Einsetzen des Sicherungsrings 12 in die Ringnut 9, ist der Innendurchmesser des Sicherungsrings 12 um wenigstens 2 % kleiner als der Innendurchmesser der Ringnut 9. Nach dem Einsetzen in die Ringnut 9 liegt daher der Dichtring 12 mit radialer Spannkraft an dem Grund der Ringnut 9 an. Die Breite der Ringnut 9 ist im Wesentlichen gleich dem Schnurdurchmesser des Sicherungsrings 12.

Im ersten Gewindeabschnitt 10 ist der Schaft 2 von einer Radialbohrung 14 durchdrungen, die in den Hohlraum 3 mündet. Desweiteren befindet sich in der Außenfläche des Schaftes 2 eine Längsnut 15, die sich von der Radialbohrung 14 durch den ersten und zweiten Gewindeabschnitt 10, 11 bis zum freien Ende des Schaftes 2 erstreckt. Die Tiefe der Längsnut 15 reicht wenigstens bis zum Kerndurchmesser des Außengewindes 6. Im Bereich der Längsnut 15 sind daher die Gewinderippen des Außengewindes 6 unterbrochen.

Wird die Verschlussschraube 1 in eine mit passendem Innengewinde versehene Anschlussbohrung eines pneumatischen Druckbehälters eingeschraubt und mit dem vorgesehenen Drehmoment angezogen, so wird der Dichtring 8 zwischen dem Kopf 4 und einer Gegenfläche des Druckbehälters eingespannt und dabei elastisch verformt. Die von dem verformten Dichtring 8 ausgehende Reaktionskraft sorgt für axiale Verspannung der Verschlussschraube 1 im Innengewinde der Anschlussbohrung des Behälters und erzeugt ein die Verschlussschraube 1 gegen Lösen sicherndes Reibmoment. Zusätzlich wird die Verschlussschraube 1 durch den Sicherungsring 12 gegen Lösen gesichert, der mit einem oder mehreren Gewinderippen des Innengewindes der Anschlussbohrung in Eingriff gelangt und dabei radial verformt und gespannt wird. Durch diese radiale Spannung des Sicherungsrings 12 wird ein zusätzliches Reibmoment erzeugt, so dass selbst bei Nachlassen der axialen Spannkraft die Verschlussschraube 1 zuverlässig gegen Lösen in der Anschlussbohrung gesichert ist.

Wesentlich für diese Sicherungsfunktion ist hierbei, dass der Sicherungsring 12 von Druckänderungen, die im Inneren des Druckbehälters auftreten, unbeeinflusst bleibt. Dies wird dadurch erreicht, dass beide Seiten des Sicherungsrings 12 über die Abschnitte der Längsnut 15 und in einem Fall zusätzlich über die Radialbohrung 14 und den Hohlraum 3 mit dem Innenraum des Druckbehälters in Verbindung stehen. Jede Druckänderung im Inneren des Druckbehälters wird über diese Verbindungen gleichzeitig auf beiden Seiten des Sicherungsrings 12 wirksam, so dass dieser seine eingespannte Lage und damit seine Sicherungsfunktion auch bei Druckänderungen unverändert beibehält.

Die beschriebene Verschlussschraube 1 kann vorteilhaft in einem Stück aus thermoplastischem oder duroplastischem Kunststoff hergestellt werden. Der Dichtring 8 und der Sicherungsring 12 werden anschließend zur Bildung einer vormontierten und gebrauchsfertigen Einheit an der Verschlussschraube angebracht.

Die beschriebene Verschlussschraube eignet sich zum Verschließen von mit Innengewinde versehenen Anschlussbohrungen von Komponenten, wie Ventile, Druckbehälter, Steuereinheiten, von pneumatischen Anlagen, hierunter auch Anlagen von Fahrzeugen.

## Patentansprüche

1. Verschlussschraube für einen Druckbehälter mit einem Kopf (4), der einen Werkzeugeingriffsbereich (5) hat, und mit einem sich längs einer Achse erstreckenden, mit einem Außengewinde (6) versehenen, zylindrischen Schaft (2), der einen am freien Ende des Schafts (2) offenen und an dem Kopf (4) verschlossenen Hohlraum (3) aufweist, wobei der Schaft (2) in der Außenfläche eine Ringnut (9) aufweist, die das Außengewinde (6) in einen kopfseitigen ersten Gewindeabschnitt (10) und in einen dem freien Schaftende benachbarten zweiten Gewindeabschnitt (11) unterteilt und die einen Sicherungsring (12) aus elastomerem Material enthält, dessen Außendurchmesser größer ist als der Kerndurchmesser eines zum Außengewinde (6) passenden Innengewindes, wobei eine Radialbohrung (14) den Schaft im Bereich des ersten Gewindeabschnitts (10) durchdringt und in den Hohlraum (3) mündet, **dadurch gekennzeichnet, dass** der Schaft (2) in der Außenfläche eine Längsnut (15) aufweist, die sich von der Radialbohrung (14) bis zum freien Schaftende erstreckt und deren Tiefe wenigstens bis zum Kerndurchmesser des Außengewindes (6) reicht.

2. Verschlussschraube nach Anspruch 1, **dadurch gekennzeichnet, dass** der Sicherungsring (12) ein O-Ring ist.

3. Verschlussschraube nach einem der vorhergehenden Ansprüche, **dadurch gekennzeichnet, dass** der Außendurchmesser des Sicherungsrings (12) in der Ringnut (9) um wenigstens 2 % größer ist als der Kerndurchmesser des zum Außengewinde (6) passenden Innengewindes.

4. Verschlussschraube nach einem der vorhergehenden Ansprüche, **dadurch gekennzeichnet, dass** der Innendurchmesser des Sicherungsrings (12) im entspannten Zustand um wenigstens 2 % kleiner ist als der Innendurchmesser der Ringnut (9).

5. Verschlussschraube nach einem der vorhergehenden Ansprüche, **dadurch gekennzeichnet, dass** sie aus einem thermoplastischen oder duroplastischen Kunststoff besteht.

6. Verschlussschraube nach einem der vorhergehenden Ansprüche, **dadurch gekennzeichnet, dass** zwischen dem Kopf (4) und dem ersten Gewindeabschnitt (10) eine hohlkehlartige Dichtfläche (7) zur Aufnahme eines Dichtrings (8) ausgebildet ist.

7. Verschlussschraube nach einem der vorhergehenden Ansprüche, **dadurch gekennzeichnet, dass** der Hohlraum (3) eine Längsrippe (13) aufweist.

8. Verschlussschraube nach einem der vorhergehenden Ansprüche, **dadurch gekennzeichnet, dass** der Werkzeugeingriffsbereich (5) des Kopfes (4) als Doppeltsechskant bzw. Zwölfkantprisma ausgebildet ist.

## Claims

1. Plug screw for a pressurised container, comprising a head (4) which has a tool engagement region (5), and comprising a cylindrical shank (2) which extends along an axis, is provided with an external thread (6) and has a hollow space (3) which is open at the free end of the shank (2) and closed at the head (4), the outer surface of the shank (2) having an annular groove (9) which divides the external thread (6) into a head-end first threaded portion (10) and a second threaded portion (11) adjacent to the free shank end and which contains a securing ring (12) consisting of an elastomeric material, the outer diameter of which is greater than the core diameter of an internal thread compatible with the external thread (6), a radial hole (14) penetrating the shank in the region of the first threaded portion (10) and opening into the hollow space (3), **characterised in that** the outer surface of the shank (2) has a longitudinal groove (15) which extends from the radial hole (14) to the free shank end and the depth of which reaches at least the core diameter of the external thread (6).

2. Plug screw according to claim 1, **characterised in that** the securing ring (12) is an O-ring.

3. Plug screw according to either of the preceding claims, **characterised in that** the outer diameter of the securing ring (12) in the annular groove (9) is at least 2% greater than the core diameter of the internal thread compatible with the external thread (6).

4. Plug screw according to any of the preceding claims, **characterised in that** the inner diameter of the securing ring (12) in the loosened state is 2% smaller than the inner diameter of the annular groove (9).

5. Plug screw according to any of the preceding claims, **characterised in that** it consists of a thermoplastic or duroplastic plastics material.

6. Plug screw according to any of the preceding claims, **characterised in that** a chamfer-like sealing surface (7) for receiving a sealing ring (8) is formed between the head (4) and the first threaded portion (10).

7. Plug screw according to any of the preceding claims, **characterised in that** the hollow space (3) has a longitudinal rib (13).

8. Plug screw according to any of the preceding claims, **characterised in that** the tool engagement region (5) of the head (4) is designed as a bi-hexagonal or twelve-point prism.

## Revendications

1. Bouchon fileté pour un récipient sous pression, comprenant une tête (4) ayant une partie d'engagement pour un outil (5), et une douille cylindrique (2) s'étendant le long d'un axe et pourvue d'un filetage externe (6), la douille (2) ayant une cavité (3) ouverte à l'extrémité libre de la douille (2) et fermée à la tête (4), la douille (2) ayant dans la surface externe une rainure annulaire (9) qui divise le filetage externe (6) en une première section filetée (10) du côté de la tête et une seconde section filetée (11) adjacente à l'extrémité libre de la douille, et qui contient une bague de blocage (12) en matériau élastomère dont le diamètre externe est supérieur au diamètre du noyau d'un filetage interne correspondant au filetage externe (6), un alésage radial (14) traversant la douille au niveau de la première section filetée (10) et débouchant dans la cavité (3), **caractérisé en ce que** la douille (2) présente dans la surface externe une rainure longitudinale (15) qui s'étend de l'alésage radial (14) jusqu'à l'extrémité libre de la douille et dont la profondeur s'étend au moins jusqu'au diamètre du noyau du filetage externe (6).

2. Bouchon fileté selon la revendication 1, **caractérisé en ce que** la bague de blocage (12) est un joint torique.

3. Bouchon fileté selon l'une des revendications précédentes, **caractérisé en ce que** le diamètre externe de la bague de blocage (12) dans la rainure annulaire (9) est supérieur d'au moins 2 % au diamètre du noyau du filetage interne correspondant au filetage externe (6).

4. Bouchon fileté selon l'une des revendications précédentes, **caractérisé en ce que** le diamètre interne de la bague de blocage (12) à l'état détendu est inférieur d'au moins 2 % au diamètre interne de la rainure annulaire (9).

5. Bouchon fileté selon l'une des revendications précédentes, **caractérisé en ce qu'**il est réalisé en matière plastique thermoplastique ou thermodurcissable.

6. Bouchon fileté selon l'une des revendications précédentes, **caractérisé en ce qu'**une surface d'étanchéité en forme de gorge (7) est formée entre la tête (4) et la première section filetée (10) pour recevoir une bague d'étanchéité (8).

7. Bouchon fileté selon l'une des revendications précédentes, **caractérisé en ce que** la cavité (3) est munie d'une nervure longitudinale (13).

8. Bouchon fileté selon l'une des revendications précédentes, **caractérisé en ce que** la partie d'engagement pour un outil (5) de la tête (4) est formée comme un prisme à double six pans ou à douze pans.
